# EUROPEAN PATENT SPECIFICATION

(11) **EP 4 202 189 B1**
(45) Date of publication and mention of the grant of the patent: **05.08.2026**
(21) Application number: 21899290.7
(22) Date of filing: 09.11.2021
(51) Int. Cl.: F01D 15/10, F01D 25/00, F01K 23/10, F01D 25/10, F01K 11/02

(54) **CRYOGENIC POWER GENERATION TURBINE AND CRYOGENIC POWER GENERATION SYSTEM COMPRISING CRYOGENIC POWER GENERATION TURBINE**
KRYOGENE STROMERZEUGUNGSTURBINE UND KRYOGENES STROMERZEUGUNGSSYSTEM MIT EINER KRYOGENEN STROMERZEUGUNGSTURBINE
TURBINE DE PRODUCTION D'ÉNERGIE CRYOGÉNIQUE ET SYSTÈME DE PRODUCTION D'ÉNERGIE CRYOGÉNIQUE LA COMPRENANT

(43) Date of publication of application: 28.06.2023
(73) Proprietor: Mitsubishi Heavy Industries Marine Machinery & Equipment Co., Ltd., Nagasaki-shi Nagasaki 8508610 (JP)
(72) Inventor: KAWANAMI, Akira, Nagasaki-shi Nagasaki 8508610 (JP); TAKATA, Ryo, Tokyo 1008332 (JP)
(74) Representative: Hoffmann Eitle
(86) International application number: PCT/JP2021/041242
(87) International publication number: WO 2023/084619

(56) References cited:
- CN-A- 109 488 399
- CN-A- 111 749 741
- CN-A- 111 980 768
- CN-U- 210 660 229
- CN-U- 210 660 229
- JP-A- 2012 041 933
- JP-A- H09 112 207
- JP-A- H09 112 207

## Description

### TECHNICAL FIELD

The present disclosure relates to a cryogenic generator turbine which is disposed in a heat medium circulation line configured to circulate a heat medium for heating a liquefied gas, and a cryogenic power generation system including the cryogenic generator turbine.

### BACKGROUND

A Liquefied gas (for example, a liquefied natural gas) is liquefied for the purpose of transportation and storage, and is raised in temperature and vaporized by a heat medium such as seawater when supplied to a supply destination such as city gas or thermal power generation. When the liquefied gas is vaporized, cryogenic power generation may be performed in which cold energy is recovered as electric power instead of being discarded in seawater.

ORC (Organic Rankine Cycle) is known as a cryogenic power generation cycle using a liquefied natural gas. The ORC is a cycle process where a low-temperature working fluid, which circulates in a closed loop and has a lower boiling point than water, is cooled and condensed by a liquefied natural gas in a condenser (steam condenser), and then boosted by a pump, and heated and evaporated in an evaporator with seawater or the like being as a heat source, and the resulting steam is introduced into a cryogenic generator turbine to obtain power.

The cryogenic generator turbine, which is used in ORC or the like and recovers cold energy to generate electricity, generally have a structure in which the turbine is disposed only at one end of a shaft of a generator. However, in the case of this structure, it is necessary to provide a counterweight at another shaft end.

JP H8-218816A discloses a cryogenic generator turbine in which two radial turbines and a generator are coaxially disposed in the same casing in order to reduce the size of a cryogenic power generation device. In the cryogenic generator turbine, the generator is disposed at the center of a shaft, and the radial turbines are disposed at both ends of the shaft.

CN 210 660 229 U discloses a cryogenic generator turbine with the pre-characterizing features of claims 1. Further related art may be found in JP H09 112207 A which describes an integral turbine generator.

### SUMMARY

### Technical Problem

A generator rotating at high speed needs to be cooled, and a water cooling method is generally used as a cooling method for the generator. In a technique disclosed in JPH8-218816A, it is necessary to secure a cooling source (cooling water) in order to cool the generator, and it is necessary to provide a cooling mechanism such as a cooling flow line or equipment necessary for cooling. Thus, there is a concern that the size of the cryogenic power generation device increases.

In view of the above issues, an object of at least one embodiment of the present disclosure is to provide a cryogenic generator turbine capable of suppressing the increase in size of the device by eliminating the need for or reducing the size of the cooling mechanism.

### Solution to Problem

This object is solved by cryogenic generator turbine with the features of claim 1 and a cryogenic power generation system with the features of claim 7. Preferred embodiments follow from the other claims.

In order to achieve the above object, a cryogenic generator turbine according to one aspect is a cryogenic generator turbine which is disposed in a heat medium circulation line configured to circulate a heat medium for heating a liquefied gas, the cryogenic generator turbine including a rotor shaft, an inner casing for rotatably housing the rotor shaft, an outer casing disposed on an outer peripheral side of the inner casing, a generator which includes a generator rotor formed on an outer peripheral surface of the rotor shaft and a generator stator supported by an inner peripheral surface of the inner casing, a first-stage moving blade disposed on one side of the rotor shaft relative to the generator rotor, a first-stage stationary blade supported by an inner peripheral surface of the outer casing or an outer peripheral surface of the inner casing on the one side relative to the first-stage moving blade, a second-stage stationary blade supported by the inner peripheral surface of the outer casing or the outer peripheral surface of the inner casing on another side of the rotor shaft relative to the generator rotor, a second-stage moving blade disposed on the another side relative to the second-stage stationary blade, and a heat medium flow line defined between the outer peripheral surface of the inner casing and the inner peripheral surface of the outer casing, the heat medium flow line extending from upstream of the first-stage stationary blade to downstream of the second-stage moving blade along an axial direction of the rotor shaft.

### Advantageous Effects

According to a cryogenic generator turbine of the present disclosure, it is possible to provide a cryogenic generator turbine capable of suppressing an increase in size of a device by eliminating the need for or reducing the size of a cooling mechanism.

### BRIEF DESCRIPTION OF DRAWINGS

FIG. 1 is a schematic configuration view schematically showing the overall configuration of a cryogenic power generation system including a cryogenic generator turbine according to an embodiment of the present disclosure.
FIG. 2 is a schematic cross-sectional view of the cryogenic generator turbine according to an embodiment of the present invention;
FIG. 3 is a cross-sectional view of the cryogenic generator turbine taken along line A-A shown in FIG. 2.
FIG. 4 is a schematic cross-sectional view of the cryogenic generator turbine according to an embodiment of the present disclosure.

### DETAILED DESCRIPTION

Embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including" or "having" one constitutional element is not an exclusive expression that excludes the presence of other constitutional elements.

The same configurations are indicated by the same reference characters and may not be described again in detail.

### (Cryogenic power generation system)

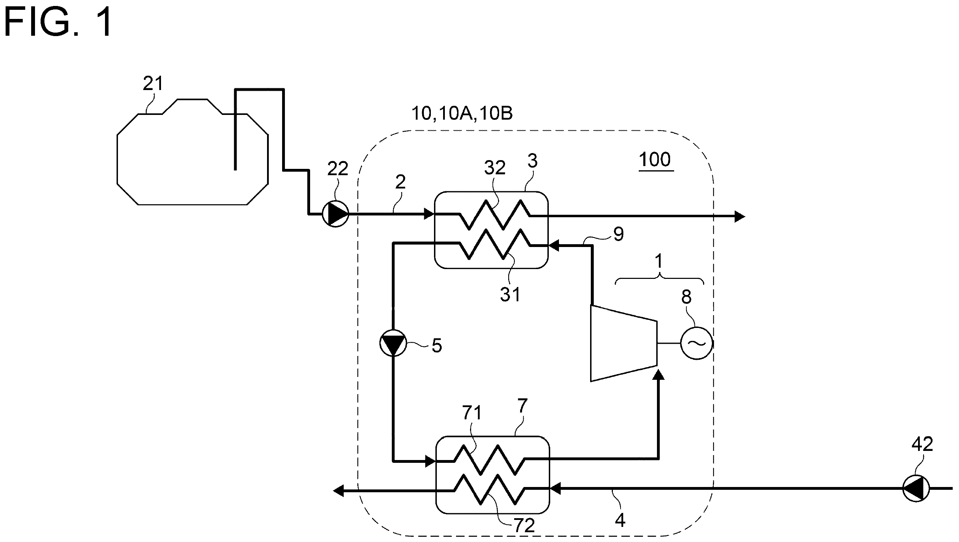

FIG. 1 is a schematic configuration view schematically showing the overall configuration of a cryogenic power generation system including a cryogenic generator turbine according to an embodiment of the present disclosure.

A cryogenic power generation system 100 according to an embodiment of the present embodiment is the cryogenic power generation system 100 for recovering cold energy of a liquefied gas as electric power via a heat medium for heating the liquefied gas.

The cryogenic power generation system 100 is not particularly limited, but is installed in, for example, a floating structure 10A or a land liquefied gas terminal 10B described below.

The floating structure 10A is a structure capable of floating on water. The floating structure 10A has a propulsion device configured to drive a propulsion device such as a propeller, and includes a vessel capable of self-propelling by driving the propulsion device or a floating body without the propulsion device. In the floating structure 10A, a liquid liquefied gas is stored, and the liquid liquefied gas is warmed and vaporized by seawater or the like, and flowed into an engine (not shown) to obtain a propulsive force. When the liquefied gas is vaporized, cold energy is not discarded in seawater by the cryogenic power generation system 100, but is recovered as electric power by a cryogenic generator turbine 1 described later.

The land LNG (liquefied gas) terminal 10B receives and stores a liquefied gas transported by an LNG carrier. Then, when the liquefied gas is supplied to a supply destination such as city gas or a thermal power plant, the liquefied gas is warmed by seawater or the like to be returned to a gas. When the liquefied gas is vaporized, the cold energy is not discarded in seawater by the cryogenic power generation system 100, but is recovered as electric power by the cryogenic generator turbine 1 described later.

Herein, in the following example, a case, where the cryogenic power generation system 100 of the present disclosure is installed on a vessel 10 using a liquefied gas as fuel of the above-described floating structure 10A, will be described as an example.

As shown in FIG. 1, the cryogenic power generation system 100 includes the cryogenic generator turbine 1, a liquefied gas supply line 2, a condenser 3, a heating fluid supply line 4, a cryogenic pump 5, an evaporator 7, and a heat medium circulation line 9. The cryogenic generator turbine 1, the condenser 3, the cryogenic pump 5, and the evaporator 7 are connected to each other by the heat medium circulation line 9. Further, the liquefied gas supply line 2 is connected to the condenser 3. Further, the heating fluid supply line 4 is connected to the evaporator 7. Each of the heat medium circulation line 9, the liquefied gas supply line 2, and the heating fluid supply line 4 includes a flow line, such as a pipeline, through which a fluid flows. Then, the heat medium circulates in the heat medium circulation line 9 while the state of the heat medium is changed to a liquid or a gas, thereby driving the cryogenic power generation system 100.

The heat medium circulation line 9 is configured to circulate a heat medium having a lower solidifying point than water. Hereinafter, liquefied natural gas (LNG) will be described as a specific example of the liquefied gas, and propane will be described as a specific example of the heat medium flowing through the heat medium circulation line 9. However, the present disclosure is also applicable to a liquefied gas (such as liquefied hydrogen) other than a liquefied natural gas, and further is also applicable to a case where a heat medium other than propane such as R1234yf or R1234ze is used as the heat medium flowing through the heat medium circulation line 9.

The condenser 3 is configured to condense a working fluid by heat exchange between the heat medium and the liquefied gas. The condenser 3 internally includes a heating-side pipeline 31 which is connected to the heat medium circulation line 9 and into which the heat medium circulating through the heat medium circulation line 9 flows, and a heated-side pipeline 32 which is connected to the liquefied gas supply line 2 and into which the liquefied gas flowing through the liquefied gas supply line 2 flows. Then, the heat medium flowing through the heating-side pipeline 31 and the liquefied gas flowing through the heated-side pipeline 32 are configured to exchange heat. In the condenser 3, by the heat exchange, the heat medium is cooled and condensed, and the liquefied gas is heated.

The liquefied gas supply line 2 on the upstream side of the condenser 3 is connected to a liquefied gas pump 22, and the further upstream side of the liquefied gas pump 22 is connected to a liquefied gas storage device 21.

By driving the liquefied gas pump 22, the liquid liquefied gas stored in the liquefied gas storage device 21 is sent to the liquefied gas supply line 2, flows through the liquefied gas supply line 2 from upstream to downstream, and is sent to the condenser 3. Then, the liquefied gas vaporized by the heat exchange in the condenser 3 flows through the liquefied gas supply line 2 again after flowing through the heated-side pipeline 32, and is supplied as fuel to an engine (not shown) of the vessel 10 installed downstream of the condenser 3.

The cryogenic pump 5 is configured to boost the heat medium supplied from the condenser 3. By driving the cryogenic pump 5 connected to the heat medium circulation line 9, the heat medium circulates through the heat medium circulation line 9. The heat medium flows from the condenser 3 to the cryogenic pump 5, from the cryogenic pump 5 to the evaporator 7, from the evaporator 7 to the cryogenic generator turbine 1, and from the cryogenic generator turbine 1 to the condenser 3.

The form of the cryogenic pump 5 is not particularly limited, as long as it is possible to boost the heat medium. For example, it is possible to select the form appropriately in accordance with the embodiment, for example, a turbo pump (such as a centrifugal pump, a mixed flow pump, or an axial-flow pump), a positive displacement pump (a reciprocating pump or a rotary pump), or a special pump (a submersible motor pump).

The evaporator 7 is configured to evaporate the heat medium by heat exchange between the heat medium boosted by the cryogenic pump 5 and the heating fluid introduced from the outside of the cryogenic power generation system 100. The evaporator 7 internally includes a heat medium heated-side pipeline 71 into which the heat medium boosted by the cryogenic pump 5 flows and which is connected to the heat medium circulation line 9, and a heat medium heating-side pipeline 72 which is connected to the heating fluid supply line 4 and into which the heating fluid introduced from the outside of the cryogenic power generation system 100 flows. Then, the heat medium flowing through the heat medium heated-side pipeline 71 and the heat medium flowing through the heating-side pipeline 72 are configured to exchange heat. In the evaporator 7, by the heat exchange, the heat medium is heated and evaporated, and the heating fluid is cooled.

The heating fluid supply line 4 on the upstream side of the evaporator 7 is connected to a heating fluid pump 42. The further upstream side of the heating fluid pump 42 in the heating fluid supply line 4 is connected to a heating fluid supply source so that the heating fluid is introduced from the outside of the cryogenic power generation system 100.

By driving the heating fluid pump 42, the heating fluid is sent from the heating fluid supply source to the heating fluid supply line 4, flows through the heating fluid supply line 4 from upstream to downstream, and is sent to the evaporator 7. Then, the heating fluid cooled by the heat exchange in the evaporator 7 flows through the heating fluid supply line 4 again after flowing through the heat medium heating-side pipeline 72, and is discharged to the outside of the cryogenic power generation system 100.

The above-described "heating fluid" can be a fluid that heats the heat medium circulating through the heat medium circulation line 9 as the heat medium in the evaporator 7, and may be steam, hot water, seawater, engine cooling water, or room temperature water.

If the cryogenic power generation system 100 is mounted on the vessel 10, the heating fluid can suitably use water that is easily available on the vessel 10 (for example, outboard water such as seawater or engine cooling water having cooled the engine of the vessel 10).

The cryogenic generator turbine 1 is configured to be driven by a gaseous heat medium generated by the evaporator 7.

Further, the cryogenic generator turbine 1 includes a generator 8. Then, a rotor shaft 11 of the cryogenic generator turbine 1, which will be described later, is rotated by the gaseous heat medium generated by the evaporator 7, thereby driving the generator 8. The gaseous heat medium having driven the cryogenic generator turbine 1 flows through the heat medium circulation line 9 toward the above-described condenser 3 installed downstream of the cryogenic generator turbine 1.

### (Cryogenic generator turbine)

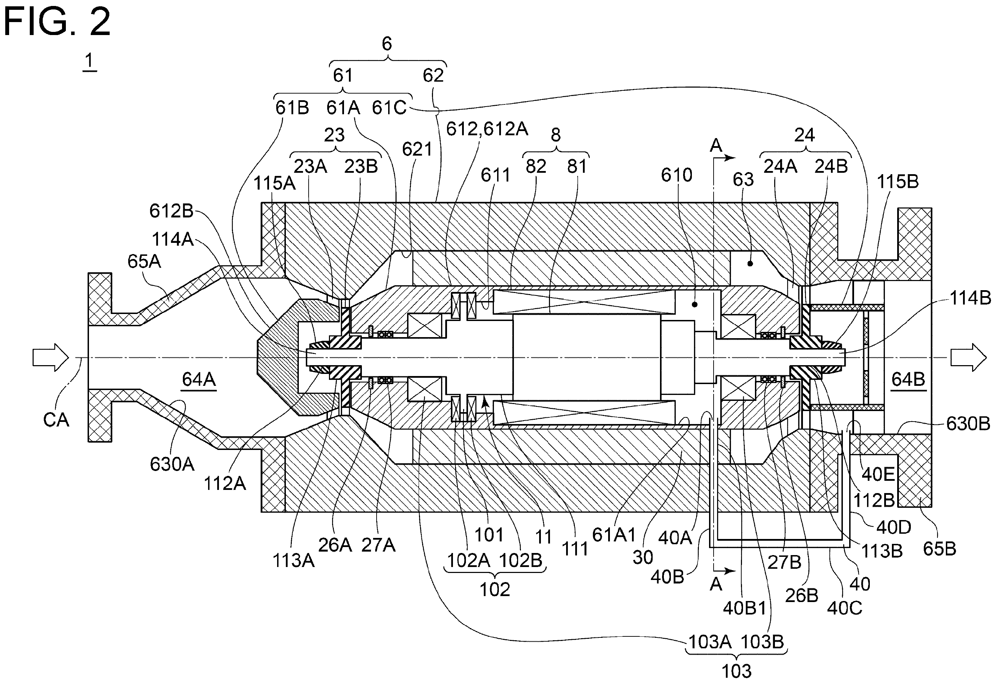

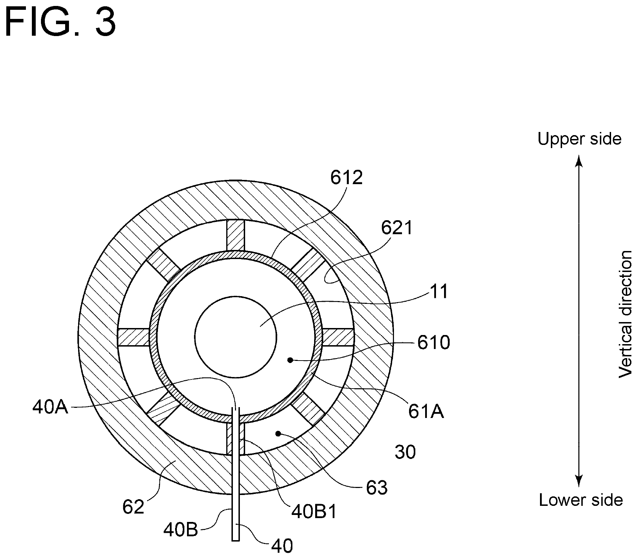

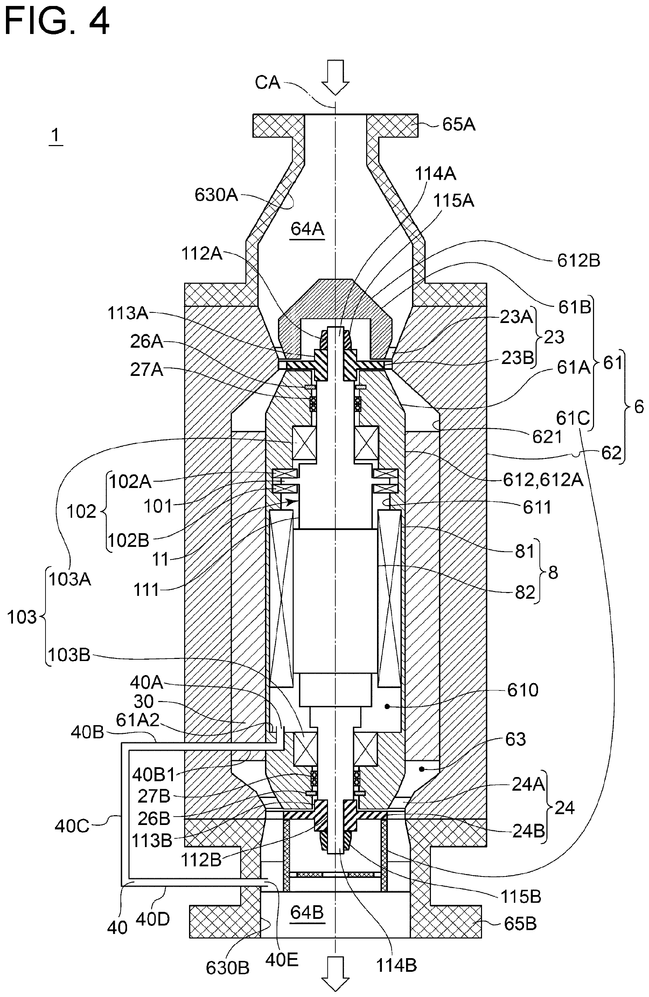

FIG. 2 is a schematic cross-sectional view of the cryogenic generator turbine according to an embodiment of the present disclosure, and is a view when the cryogenic generator turbine is placed horizontally. FIG. 3 is a cross-sectional view of the cryogenic generator turbine taken along line A-A shown in FIG. 2. FIG. 4 is a schematic cross-sectional view of the cryogenic generator turbine according to an embodiment of the present disclosure, and is a view when the cryogenic generator turbine is placed vertically.

Hereinafter, the upstream side in the flow direction of the heat medium in the cryogenic generator turbine 1 may simply be referred to as the upstream side, and the downstream side in the flow direction of the heat medium in the cryogenic generator turbine 1 may simply be referred to as the downstream side.

Further, the radial direction of the cryogenic generator turbine 1 may simply be referred to as the radial direction, and the circumferential direction of the cryogenic generator turbine 1 may simply be referred to as the circumferential direction.

Further, the direction along an axis CA of the cryogenic generator turbine 1 may simply be referred to as the axial direction.

As shown in FIG. 2, 4, the cryogenic generator turbine 1 according to some embodiments includes the rotor shaft 11, a casing 6, the generator 8, a first-stage axial-flow turbine 23, and a second-stage axial-flow turbine 24, and a heat medium flow line 63. The first-stage axial-flow turbine 23 is composed of a first-stage moving blade 23B and a first-stage stationary blade 23A. The second-stage axial-flow turbine 24 is composed of a second-stage moving blade 24B and a second-stage stationary blade 24A.

In the illustrated embodiment, the rotor shaft 11 includes a shaft portion 111 having a longitudinal direction along the axis CA of the cryogenic generator turbine 1, a one-side disc portion 113A protruding outward into a disc shape in the radial direction from an outer surface 112A on one side (upstream side) of the shaft portion 111, and an another-side disc portion 113B protruding outward into a disc shape in the radial direction from an outer surface 112B on another side (downstream side) of the shaft portion 111.

Further, the axis CA of the cryogenic generator turbine 1 coincides with the axis of the rotor shaft 11 and the axis of the casing 6.

Further, in the embodiment shown in FIG. 2, the axis CA of the rotor shaft 11 coincides with the horizontal direction, and an end portion on the one side of the shaft portion 111 and an end portion on the another side of the shaft portion 111 are disposed at the same height level in the vertical direction.

At the end portion on the one side of the shaft portion 111 in the axial direction, a one-side protruding portion 114A is formed which protrudes outward in the axial direction relative to an inner casing member 61A described later. Further, at the end portion on the another side of the shaft portion 111 in the axial direction, an another-side protruding portion 114B is formed which protrudes outward in the axial direction relative to the inner casing member 61A. The one-side protruding portion 114A and the another-side protruding portion 114B are formed to each have a smaller diameter than another part of the shaft portion 111. The above-described one-side disc portion 113A is attached to the outer surface 112A of the one-side protruding portion 114A. Likewise, the above-described another-side disc portion 113B is attached to the outer surface 112B of the another-side protruding portion 114B. Further, a one-side nut 115A is screwed to the one side relative to the one-side disc portion 113A in the one-side protruding portion 114A, thereby fixing the one-side disc portion 113A to the shaft portion 111. Likewise, an another-side nut 115B is screwed to the another side relative to the another-side disc portion 113B in the another-side protruding portion 114B, thereby fixing the another-side disc portion 113B to the shaft portion 111.

The casing 6 is composed by an inner casing 61 for rotatably housing the rotor shaft 11, and an outer casing 62 disposed on the outer peripheral side of the inner casing 61.

In the illustrated embodiment, the inner casing 61 includes the inner casing member 61A, a one-side cover member 61B disposed on the one side (upstream side) with respect to the inner casing member 61A in the axial direction, and an another-side cover member 61C disposed on the another side (downstream side) with respect to the inner casing member 61A in the axial direction.

The inner casing member 61A has the longitudinal direction along the axial direction of the cryogenic generator turbine 1, and is disposed between the first-stage moving blades 23B and the second-stage moving blades 24B in the axial direction of the cryogenic generator turbine 1. The inner casing member 61A internally forms a space 610 where the shaft portion 111 and the generator 8 described later (in the illustrated example, a generator rotor 81 and a generator stator 82) are housed.

The one-side cover member 61B is disposed on the one side of the inner casing member 61A so as to cover the end portion on the one side of the shaft portion 111 which includes the one-side protruding portion 114A and the one-side nut 115A screwed thereto, on the one side relative to the first-stage moving blade 23B in the axial direction.

The another-side cover member 61C is disposed on the another side of the inner casing member 61A so as to cover the end portion on the another side of the shaft portion 111 which includes the another-side protruding portion 114B and the another-side nut 115B screwed thereto, on the another side relative to the second-stage moving blade 24B in the axial direction.

The generator 8 is configured to include the generator rotor 81 which includes a permanent magnet formed on the outer peripheral surface of the rotor shaft 11, and the generator stator 82 supported by an inner peripheral surface 611 of the inner casing 61.

In the illustrated embodiment, the generator rotor 8 is formed integrally with the outer peripheral surface of the rotor shaft 11, and the both form an integral structure. However, it may be configured such that the generator rotor 8 and the rotor shaft 11 are formed separately, and the generator rotor 8 is supported by the outer peripheral surface of the rotor shaft. The generator stator 82 is supported by the inner peripheral surface 611 of the inner casing member 61A, and is disposed on the outer side relative to the generator rotor 81 in the radial direction. Further, the generator rotor 81 and the generator stator 82 are disposed on the another side relative to a one-side radial bearing 103A described later and on the one side relative to an another-side radial bearing 103B described later, in the axial direction of the rotor shaft 11. That is, the generator rotor 81 and the generator stator 82 are located between the one-side radial bearing 103A and the another-side radial bearing 103B, in the axial direction of the rotor shaft 11.

The first-stage moving blade 23B is disposed on the one side of the rotor shaft 11 relative to the generator rotor 81. Further, the first-stage stationary blade 23A is supported by an inner peripheral surface 621 of the outer casing 62 or an outer peripheral surface 612 of the inner casing 61, on the one side of the rotor shaft 11 relative to the first-stage moving blade 23B.

In the illustrated embodiment, the first-stage moving blades 23B are mounted on the outer peripheral surface of the one-side disc portion 113A described above at intervals in the circumferential direction. Further, the first-stage stationary blades 23A are supported by the inner peripheral surface 621 of the outer casing 62, and are disposed on the inner peripheral surface 621 at intervals in the circumferential direction. Further, in another embodiment, the first-stage stationary blades 23A may be supported by the outer peripheral surface 612 of the inner casing 61 (the outer peripheral surface 612B of the one-side cover member 61B) and may be disposed on the outer peripheral surface 612 (outer peripheral surface 612B) at intervals in the circumferential direction, or may be supported by both the inner peripheral surface 621 of the outer casing 62 and the outer peripheral surface 612 of the inner casing 61 (the outer peripheral surface 612B of the one-side cover member 61B).

The second-stage stationary blade 24A is supported by the inner peripheral surface 621 of the outer casing 62 or the outer peripheral surface 612 of the inner casing 61, on the another side of the rotor shaft 11 relative to the generator rotor 81. Further, the second-stage moving blade 24B is disposed on the another side of the rotor shaft 11 relative to the second-stage stationary blade 24A.

In the illustrated embodiment, the second-stage moving blades 24B are mounted on the outer peripheral surface of the another-side disc portion 113B described above at intervals in the circumferential direction. Further, the second-stage stationary blades 24A are supported by the inner peripheral surface 621 of the outer casing 62, and are disposed on the inner peripheral surface 621 at intervals in the circumferential direction. Further, in another embodiment, the second-stage stationary blades 24A may be supported by the outer peripheral surface 612 of the inner casing 61 (the outer peripheral surface 612A of the inner casing member 61A) and may be disposed on the outer peripheral surface 612 (outer peripheral surface 612A) at intervals in the circumferential direction, or may be supported by both the inner peripheral surface 621 of the outer casing 62 and the outer peripheral surface 612 of the inner casing 61 (the outer peripheral surface 612A of the inner casing member 61A).

The heat medium flow line 63 is defined between the outer peripheral surface 612 of the inner casing 61 and the inner peripheral surface 621 of the outer casing 62, and is configured to extend from the upstream of the first-stage stationary blade 23A to the downstream of the second-stage moving blade 24B along the axial direction of the rotor shaft 11.

In the illustrated embodiment, the heat medium flow line 63 has the longitudinal direction along the axial direction of the cryogenic generator turbine 1 and has an annular cross section surrounding the inner casing member 61A. Then, the heat medium flow line 63 is configured to introduce the heat medium from the one side to the another side between the outer casing 62 and the inner casing 61.

Further, on the one side of the heat medium flow line 63, formed is a one-side introduction path 64A for introducing the heat medium to the heat medium flow line 63 from the one side along the axial direction. The one-side introduction path 64A is defined by an inner surface 630A of an inlet casing 65A connected to the one side of the outer casing 62, on the one side relative to the one-side cover member 61B in the axial direction.

Further, on the another side of the heat medium flow line 63, formed is an another-side discharge path 64B for discharging the heat medium from the heat medium flow line 63 to the another side along the axial direction. The another-side discharge path 64B is defined by an inner surface 630B of an outlet casing 65B connected to the another side of the outer casing 62, on the another side relative to the another-side cover member 61C in the axial direction.

Then, the heat medium introduced from the one-side introduction path 64A to the heat medium flow line 63 passes through the first-stage stationary blade 23A, and then acts on the first-stage moving blade 23B to apply a rotational force to the shaft portion 111, thereby driving the first-stage axial-flow turbine 23. The heat medium passing through the first-stage moving blade 23B exchanges heat with heat that is generated in the generator 8 (generator rotor 81, generator stator 82) which is housed in the space 610 formed in the inner casing member 61A, while flowing through the heat medium flow line 63. That is, the heat generated in the generator 8 is absorbed by the heat medium flowing through the heat medium flow line 63. Consequently, the generator 8 is cooled, and the heat medium flowing through the heat medium flow line 63 is heated.

The heated heat medium passes through the second-stage stationary blade 24A, and then acts on the second-stage moving blade 24B to apply a rotational force to the shaft portion 111, thereby driving the second-stage axial-flow turbine 24. That is, the heat medium heated by the heat exchange with the generator 8 in the heat medium flow line 63 flows into the second-stage axial-flow turbine 24, and the heated heat medium drives the second-stage axial-flow turbine 24. The heat medium flowing through the second-stage axial-flow turbine 24 is discharged from the heat medium flow line 63 to the another-side discharge path 64B, and flows out to the outside of the cryogenic generator turbine 1.

The cryogenic generator turbine 1 according to the present disclosure has the structure where the first-stage axial-flow turbine 23 composed of the first-stage moving blade 23B and the first-stage stationary blade 23A is disposed on the one side of the generator rotor 81, and the second-stage axial-flow turbine 24 composed of the second-stage moving blade 24B and the second-stage stationary blade 24A is disposed on the another side. That is, the axial-flow turbines are disposed at both ends of the generator rotor 81. Since, unlike a radial turbine, the axial-flow turbine does not require a large scroll (casing), it is possible to reduce the size of the entire cryogenic generator turbine.

Further, the heat medium flows in the heat medium flow line 63 defined between the outer peripheral surface 612 of the inner casing 61 and the inner peripheral surface 621 of the outer casing 62 in order of the first-stage stationary blade 23A, the first-stage moving blade 23B, the second-stage stationary blade 24A, and the second-stage moving blade 24B. That is, the heat medium passing through the first-stage axial-flow turbine 23 absorbs the heat of the generator 8 generated in the generator rotor 81 and the generator stator 82 while flowing through the heat medium flow line 63, and flows into the second-stage axial-flow turbine 24.

With this configuration, since the generator 8 can be cooled with the heat medium, it is possible to eliminate the need for additional installation of or to reduce the scale of a cooling mechanism such as a cooling flow line or equipment necessary for cooling, and it is possible to suppress the increase in size of the device.

Further, the heat medium recovers waste heat of the generator 8, increasing the temperature of the heat medium at the inlet of the second-stage axial-flow turbine 24. Thus, it is possible to improve efficiency of the second-stage axial-flow turbine 24.

That is, it is possible to achieve both cooling of the generator 8 and recovery of waste heat.

Further, since the axial-flow turbines are disposed at the both ends of the rotor shaft 11, it is also possible to balance the weight, and thus no counterweight is required.

In the illustrated embodiment, as shown in FIG. 2, 4, the one-side radial bearing 103A and the another-side radial bearing 103B for rotatably supporting the shaft portion 111 are housed in the space 610 formed in the inner casing member 61A. The one-side radial bearing 103A is disposed on the one side relative to the generator rotor 81, and the another-side radial bearing 103B is disposed on the another side relative to the generator rotor 81.

The one-side radial bearing 103A and the another-side radial bearing 103B are disposed so as to contact the outer peripheral surface of the shaft portion 111 of the rotor shaft 11 and rotatably support the shaft portion 111 on the inner peripheries of the one-side radial bearing 103A and the another-side radial bearing 103B. Further, the one-side radial bearing 103A and the another-side radial bearing 103B are supported by the inner peripheral surface 611 of the inner casing member 61A on the outer peripheries of the one-side radial bearing 103A and the another-side radial bearing 103B.

In the following description, a device including the one-side radial bearing 103A and the another-side radial bearing 103B may simply be referred to as a radial bearing device 103.

In the illustrated embodiment, as shown in FIG. 2, 4, the space 610 formed in the inner casing member 61A houses a thrust collar 101, a one-side thrust bearing 102A disposed to face the thrust collar 101 on the one side relative to the thrust collar 101 in the axial direction, and an another-side thrust bearing 102B disposed to face the thrust collar 101 on the another side relative to the thrust collar 101 in the axial direction.

In the following description, a device including the one-side thrust bearing 102A and the another-side thrust bearing 102B may simply be referred to as a thrust bearing device 102.

In an embodiment, the one-side radial bearing 103A, the another-side radial bearing 103B, the one-side thrust bearing 102A, and the another-side thrust bearing 102B may each be constituted by a magnetic bearing.

With the above configuration, it is no longer necessary to use lubricant oil, and it is also unnecessary to form a device for supplying lubricant oil, making it possible to suppress the increase in size of the device. Further, since no lubricant oil is used, it is also possible to prevent oil (lubricant oil) from being mixed into the heat medium.

In the illustrated embodiment, the thrust collar 101 and the thrust bearing device102 are disposed on the another-side relative to the one-side radial bearing 103A and on the one side relative to the generator rotor 81. That is, the generator rotor 81 and the generator stator 82 are disposed between the thrust bearing device 102 and the another-side radial bearing 103B along the axial direction of the rotor shaft 11.

Further, in the illustrated embodiment, it is configured such that a blade height of the first-stage stationary blade 23A is lower than a blade height of the second-stage stationary blade 24A, and a blade height of the first-stage moving blade 23B is lower than a blade height of the second-stage moving blade 24B. Thus, the inner peripheral surface 621 of the outer casing 62 for housing the first-stage axial-flow turbine 23 and the second-stage axial-flow turbine 24 is formed so as to make the heat medium flow line 63 wider in the radial direction at a position where the second-stage axial-flow turbine 24 is disposed than at a position where the first-stage axial-flow turbine 23 is disposed.

In some embodiments, the above-described cryogenic generator turbine 1 further includes a one-side seal portion 26A for sealing between the rotor shaft 11 and the inner casing 61 on the another side (downstream side) relative to the first-stage moving blade 23B and the one side (upstream side) relative to the generator rotor 81, as shown in FIG. 2, 4.

In the illustrated embodiment, the one-side seal portion 26A seals a gap between the inner peripheral surface 611 of the inner casing member 61A and the outer peripheral surface of the shaft portion 111 of the rotor shaft 11 in the space 610 formed in the inner casing member 61A. The one-side seal portion 26A is disposed on the one side relative to the one-side radial bearing 103A in the axial direction of the cryogenic generator turbine 1.

Further, a ball bearing 27A is disposed between the one-side seal portion 26A and the one-side radial bearing 103A. Likewise, a ball bearing 27B is disposed between another-side seal portion 26B and the another-side radial bearing 103B. When the cryogenic generator turbine 1 stops or trips due to trouble, the ball bearing 27A and the ball bearing 27B support the rotor shaft 11, preventing contact between the rotor shaft 11 and the radial bearing 103 constituted by the magnetic bearing.

Further, the one-side seal portion 26A may include a mechanical seal, or may include a labyrinth seal disposed on the shaft portion 111 or the inner casing member 61A by uneven processing.

With such configuration, since it is possible to suppress that the heat medium passing through the first-stage moving blade 23B leaks into the inner casing 61, as compared with a case where the seal member 26 is not provided, it is possible to suppress a decrease in heat medium flowing through the heat medium flow line 63. Thus, as compared with the case where the seal member is not provided, it is possible to recover much heat of the generator generated in the generator rotor 81 and the generator stator 82, increasing the inlet temperature of the second-stage axial-flow turbine 24 and making it possible to improve efficiency of the second-stage axial-flow turbine 24.

Further, since the heat medium leaking into the inner casing 61 can be sealed between a high-pressure region on the side of the first-stage axial-flow turbine 23 and a low-pressure region on the side of the second-stage axial-flow turbine 24, as compared with the case where the seal member is not provided, a pressure in the inner casing 61 can be kept low. Thus, it is possible to reduce a thrust force acting on the rotor shaft 11 and a windage loss (loss) caused in the inner casing 61.

By the way, suppressing the leak by providing the one-side seal portion 26A and improving the efficiency of the second-stage axial-flow turbine 24 are in a trade-off relationship with a cooling capacity of the generator 8 by the heat medium. That is, since the heat medium leaks into the inner casing 61 in a case where the one-side seal portion 26A is not provided, it is possible to directly cool the inside of the inner casing 61 where the temperature is increased by the heat generated from the generator 8 (the heat generated in the generator rotor 81 and the generator stator 82). Thus, the capability to cool the generator 8 is high relative to a case where the one-side seal portion 26A is provided.

As a result of researches by the present inventors, it becomes clear that the generator 8 can sufficiently be cooled by the heat medium flowing through the heat medium flow line 63 without directly cooling the inside of the inner casing 61, in the small cryogenic generator turbine 1 having an output of not greater than 100 kW. Accordingly, in the case of the small cryogenic generator turbine 1, it is preferable to provide the one-side seal portion 26A, suppress the leak, and improve the efficiency of the second-stage axial-flow turbine 24.

In some embodiments, the above-described cryogenic generator turbine 1 further includes the another-side seal portion 26B for sealing between the rotor shaft 11 and the inner casing 61 on the one side relative to the second-stage moving blade 24B and the another side relative to the generator rotor 81, as shown in FIG. 2, 4.

In the illustrated embodiment, the another-side seal portion 26B seals the gap between the inner peripheral surface 611 of the inner casing member 61A and the outer peripheral surface of the shaft portion 111 of the rotor shaft 11 in the space 610 formed in the inner casing member 61A. The another-side seal portion 26B is disposed on the another side relative to the another-side radial bearing 103B in the axial direction of the cryogenic generator turbine 1.

Further, the another-side seal portion 26B may include a mechanical seal, or may include a labyrinth seal disposed on the shaft portion 111 or the inner casing member 61A by uneven processing.

With such configuration, it is possible to reduce outflow of the heat medium flowing into the inner casing 61 (inner casing member 61A) from the heat medium flow line 63 to the heat medium flow line 63 from between the second-stage stationary blade 24A and the second-stage moving blade 24B, and to suppress generation of a vortex flow in the heat medium passing through the second-stage axial-flow turbine 24. Thus, it is possible to improve performance of the second-stage axial-flow turbine 24.

In some embodiments, the above-described cryogenic generator turbine 1 further includes a bypass line 40 causing the inside of the inner casing 61 to communicate with a position on the downstream side relative to the second-stage moving blade 24B in the heat medium flow line 63, as shown in FIGs. 2 to 4.

In the illustrated embodiment, at an end portion on the one side of the bypass line 40, an inlet-side opening portion 40A is formed so as to open to the space 610 formed in the inner casing member 61A, on the one side relative to the second-stage moving blade 24B in the axial direction of the rotor shaft 11.

Further, in the embodiment shown in FIG. 2, the bypass line 40 penetrates an axially extending portion 61A1 on a bottom side of the inner casing member 61A, on the lower side of the cryogenic generator turbine 1 in the vertical direction. The inlet-side opening portion 40A is located below a lower surface of the shaft portion 111 and in the vicinity of an inner surface of the axially extending portion 61A1. The axially extending portion 61A1 is a side surface portion extending along the axial direction of the inner casing member 61A and disposed such that a distance from the axis CA is constant in the radial direction, and is a bottom-side surface on the lower side in the vertical direction where the heat medium leaking into the inner casing 61 is likely to accumulate. By providing the inlet-side opening portion 40A in the vicinity of the axially extending portion 61A1, the heat medium can easily flow into the inlet-side opening portion 40A.

In the illustrated embodiment, the inlet-side opening portion 40A at the end portion of the bypass line 40 is connected to a radially extending introduction portion 40B of the bypass line 40, and the heat medium leaking into the inner casing member 61A passes through the inlet-side opening portion 40A and flows through the radially extending introduction portion 40B of the bypass line 40. The radially extending introduction portion 40B is disposed so as to penetrate the inner casing member 61A, the heat medium flow line 63, and the outer casing 62 along the radial direction, and to extend to the outside of the outer casing 62.

The radially extending introduction portion 40B is connected to an axially extending portion 40C, and the heat medium flowing through the radially extending introduction portion 40B flows into the axially extending portion 40C.

The axially extending portion 40C is disposed outside the outer casing 62 along the axial direction of the rotor shaft 11.

The axially extending portion 40C is connected to a radially extending discharge portion 40D, and the heat medium flowing through the axially extending portion 40C flows into the radially extending discharge portion 40D.

The radially extending discharge portion 40D is disposed so as to penetrate the outer casing 62, the heat medium flow line 63 along the radial direction. Further, at an end portion on the another side of the bypass line 40, an outlet-side opening portion 40E is formed so as to open to the heat medium flow line 63, on the another side relative to the second-stage moving blade 24B in the axial direction of the rotor shaft 11. The radially extending discharge portion 40D is connected to the outlet-side opening portion 40E, and the heat medium flowing through the radially extending discharge portion 40D is discharged to the outside of the bypass line 40 from the outlet-side opening portion 40E.

With such configuration, by causing the heat medium flowing in the inner casing 61 to flow to the another side (downstream side) relative to the second-stage moving blade 24B in the heat medium flow line 63, it is possible to suppress that the heat medium accumulates in the inner casing 61.

Further, it is possible to reduce outflow of the heat medium flowing in the inner casing 61 to the heat medium flow line 63 from between the second-stage stationary blade 24A and the second-stage moving blade 24B, and to suppress generation of the vortex flow in the heat medium passing through the second-stage axial-flow turbine 24. Thus, it is possible to improve performance of the second-stage axial-flow turbine 24.

In the illustrated embodiment, the cryogenic generator turbine 1 is provided with both the another-side seal portion 26B and the bypass line 40 described above.

In the cryogenic generator turbine 1 in which the bypass line 40 is not provided but the another-side seal portion 26B is provided, although it is possible to reduce the outflow of the heat medium flowing into the space 610 in the inner casing 61 to the heat medium flow line 63 from between the second-stage stationary blade 24A and the second-stage moving blade 24B, since the another-side seal portion 26B is installed, the heat medium leaking into the inner casing member 61A has no discharge destination and continues to accumulate in the inner casing member 61A. However, by providing the bypass line 40 together with the another-side seal portion 26B, it is possible to discharge the heat medium leaking into the inner casing member 61A to the outside of the inner casing member 61A, and thus it is possible to suppress that the heat medium accumulates in the inner casing member 61A.

In some embodiments, the above-described cryogenic generator turbine 1 further includes at least one support portion 30 extending in the heat medium flow line 63 along the radial direction of the rotor shaft 11, as shown in FIGs. 2 to 4. The support portion 30 has one end connected to the inner peripheral surface 621 of the outer casing 62 and another end connected to the outer peripheral surface 612 of the inner casing 61.

With the above-described support portion 30, the inner casing 61 is supported by the outer casing 62. In the illustrated embodiment, the inner casing member 61A of the inner casing 61 is supported by the support portion 30.

Further, the support portion 30 is disposed in the heat medium flow line 63 and is connected to the outer peripheral surface 612 of the inner casing 61 (the outer peripheral surface 612A of the inner casing member 61A), also functioning as a cooling fin for promoting cooling of the generator 8.

It is only necessary that at least one support portion 30 is disposed along the axial direction of the cryogenic generator turbine 1, and at least one support portion 30 is disposed in the circumferential direction of the outer peripheral surface 612 of the inner casing 61. In the embodiment shown in FIG. 3, eight support portions 30 are disposed at equal intervals in the circumferential direction. Further, in the embodiments shown in FIGs. 2 and 4, one support portion 30 is disposed in the heat medium flow line 63 in the axial direction of the rotor shaft 11.

Further, in the embodiments shown in FIGs. 2 and 4, an upstream end of the support portion 30 is located on the one side (upstream side) relative to the generator stator 82 in the axial direction of the rotor shaft 11. Further, a downstream end of the support portion 30 is located on the another side (downstream side) relative to the generator stator 82 in the axial direction of the rotor shaft 11.

With such configuration, it is possible to effectively cool the generator stator 82 by the support portion 30.

Then, a part of the bypass line 40 is formed in the support portion 30. In the illustrated embodiment, the support portion 30 internally forms a penetrating portion 40B1 penetrating the support portion 30 along the radial direction. In an embodiment, a part of the bypass line 40 is constituted by the penetrating portion 40B1. Further, in another embodiment, a part of the bypass line 40 is constituted by a pipe inserted into the penetrating portion 40B1.

With such configuration, the bypass line 40 is disposed inside the support portion 30 for supporting the inner casing 61. Therefore, as compared with a case where the bypass line 40 is not disposed inside the support portion 30 but the bypass line 40 is disposed so as to extend in the heat medium flow line 63 outside the support portion 30, it is possible to suppress occurrence of a new flow line loss.

In some embodiments, as shown in FIG. 4, the above-described cryogenic generator turbine 1 is installed such that the end portion on the one side of the rotor shaft 11 is higher than the end portion on the another side of the rotor shaft 11 in the vertical direction.

In the embodiment shown in FIG. 4, the axis CA of the rotor shaft 11 coincides with the vertical direction, and the end portion on the one side of the shaft portion 111 is disposed above the end portion on the another side of the shaft portion 111 in the vertical direction.

With such configuration, since the side of the first-stage axial-flow turbine 23 is high and the side of the second-stage axial-flow turbine side 24 is low in the vertical direction, the heat medium in the heat medium flow line 63 passes through the second-stage axial-flow turbine 24 and is discharged to the outside of the cryogenic generator turbine 1. In particular, at a partial load, since the flow rate of the heat medium flowing through the heat medium flow line 63 decreases, a pressure at the inlet of the second-stage stationary blade 24A (the outlet of the first-stage moving blade 23B) decreases and a saturation temperature also decreases accordingly, which may generate droplets (drain). However, with the above configuration, it is possible to suppress generation of liquid pool in the heat medium flow line 63 at the partial load.

Further, in the embodiment shown in FIG. 4, the bypass line 40 penetrates the inner casing member 61A from a radially extending portion 61A2 on the bottom side of the inner casing member 61A, on the lower side of the cryogenic generator turbine 1 in the vertical direction. The radially extending portion 61A2 is a side surface portion extending along the radial direction of the inner casing member 61A and disposed so as to form a right angle with the axis CA, and is a bottom-side surface on the lower side in the vertical direction where the heat medium leaking into the inner casing 61 is likely to accumulate. By providing the inlet-side opening portion 40A in the radially extending portion 61A2, the heat medium can easily flow into the inlet-side opening portion 40A.

The present disclosure is not limited to the above-described embodiments, and also includes an embodiment obtained by modifying the above-described embodiments and an embodiment obtained by combining these embodiments as appropriate.

The contents described in some embodiments described above would be understood as follows, for instance.
1) A cryogenic generator turbine (1) according to one aspect is a cryogenic generator turbine (1) which is disposed in a heat medium circulation line (9) configured to circulate a heat medium for heating a liquefied gas, the cryogenic generator turbine (1) including a rotor shaft (11), an inner casing (61) for rotatably housing the rotor shaft (11), an outer casing (62) disposed on an outer peripheral side of the inner casing (61), a generator (8) which includes a generator rotor (81) formed on an outer peripheral surface of the rotor shaft (11) and a generator stator (82) supported by an inner peripheral surface (611) of the inner casing (61), a first-stage moving blade (23B) disposed on one side of the rotor shaft (11) relative to the generator rotor (81), a first-stage stationary blade (23A) supported by an inner peripheral surface (621) of the outer casing (62) or an outer peripheral surface (612) of the inner casing (61) on the one side relative to the first-stage moving blade (23B), a second-stage stationary blade (24A) supported by the inner peripheral surface (621) of the outer casing (62) or the outer peripheral surface (612) of the inner casing (61) on another side of the rotor shaft (11) relative to the generator rotor (81), a second-stage moving blade (24B) disposed on the another side relative to the second-stage stationary blade (24A), and a heat medium flow line (63) defined between the outer peripheral surface (612) of the inner casing (61) and the inner peripheral surface (621) of the outer casing (62), the heat medium flow line (63) extending from upstream of the first-stage stationary blade (23A) to downstream of the second-stage moving blade (24B) along an axial direction of the rotor shaft (11).

The cryogenic generator turbine according to the present disclosure has the structure where the first-stage axial-flow turbine composed of the first-stage moving blade and the first-stage stationary blade is disposed on the one side of the generator rotor, and the second-stage axial-flow turbine composed of the second-stage moving blade and the second-stage stationary blade is disposed on the another side. That is, the axial-flow turbines are disposed at both ends of the generator rotor. Since, unlike a radial turbine, the axial-flow turbine does not require a large scroll (casing), it is possible to reduce the size of the entire cryogenic generator turbine.

Further, the heat medium flows in the heat medium flow line defined between the outer peripheral surface of the inner casing and the inner peripheral surface of the outer casing in order of the first-stage moving blade, the first-stage stationary blade, the second-stage moving blade, and the second-stage stationary blade. That is, the heat medium passing through the first-stage axial-flow turbine absorbs the heat of the generator generated in the generator rotor and the generator stator while flowing through the heat medium flow line, and flows into the second-stage axial-flow turbine.

With this configuration, since the generator can be cooled with the heat medium, it is possible to eliminate the need for additional installation of or to reduce the scale of the cooling mechanism such as the cooling flow line or the equipment necessary for cooling, and it is possible to suppress the increase in size of the device.

Further, the heat medium recovers waste heat of the generator, increasing the temperature of the heat medium at the inlet of the second-stage axial-flow turbine. Thus, it is possible to improve efficiency of the second-stage axial-flow turbine.

That is, it is possible to achieve both cooling of the generator and recovery of waste heat.

Further, since the axial-flow turbines are disposed at the both ends of the rotor shaft, it is also possible to balance the weight, and thus no counterweight is required.

2) The cryogenic generator turbine (1) according to another aspect is the cryogenic generator turbine (1) defined in 1), which further includes a one-side seal portion (26A) for sealing between the rotor shaft (11) and the inner casing (61) on the another side relative to the first-stage moving blade (23B) and the one side relative to the generator rotor (81).

With such configuration, since it is possible to suppress that the heat medium passing through the first-stage moving blade leaks into the inner casing, as compared with a case where the seal member is not provided, it is possible to suppress a decrease in heat medium flowing through the heat medium flow line. Thus, as compared with the case where the seal member is not provided, it is possible to recover much heat of the generator generated in the generator rotor and the generator stator, increasing the inlet temperature of the second-stage axial-flow turbine and making it possible to improve efficiency of the second-stage axial-flow turbine.

Further, since the heat medium leaking into the inner casing can be sealed between a high-pressure region on the side of the first-stage axial-flow turbine and a low-pressure region on the side of the second-stage axial-flow turbine, as compared with the case where the seal member is not provided, a pressure in the inner casing can be kept low. Thus, it is possible to reduce a thrust force acting on the rotor shaft and a windage loss (loss) caused in the inner casing.

3) The cryogenic generator turbine 1 according to still another aspect is the cryogenic generator turbine (1) defined in 1) or 2), which further includes an another-side seal portion (26B) for sealing between the rotor shaft (11) and the inner casing (61) on the one side relative to the second-stage moving blade (24B) and the another side relative to the generator rotor (81).

With such configuration, it is possible to reduce outflow of the heat medium flowing into the inner casing from the heat medium flow line to the heat medium flow line from between the second-stage stationary blade and the second-stage moving blade, and to suppress generation of a vortex flow in the heat medium passing through the second-stage axial-flow turbine. Thus, it is possible to improve performance of the second-stage axial-flow turbine.

4) The cryogenic generator turbine according to yet another aspect is the cryogenic generator turbine (1) defined in any one of 1) to 3), which further includes a bypass line (40) causing an inside of the inner casing (61) to communicate with a position on a downstream side relative to the second-stage moving blade (26B) in the heat medium flow line (63).

With such configuration, by causing the heat medium flowing in the inner casing to flow to the downstream side relative to the second-stage moving blade in the heat medium flow line, it is possible to suppress that the heat medium accumulates in the inner casing.

Further, it is possible to reduce outflow of the heat medium flowing in the inner casing to the heat medium flow line from between the second-stage stationary blade and the second-stage moving blade, and to suppress generation of the vortex flow in the heat medium passing through the second-stage axial-flow turbine. Thus, it is possible to improve performance of the second-stage axial-flow turbine.

5) The cryogenic generator turbine (1) according to another aspect is the cryogenic generator turbine (1) defined in 4), which further includes at least one support portion (30) extending in the heat medium flow line (63) along a radial direction of the rotor shaft (11), the at least one support portion (30) being connected at one end to the inner peripheral surface (621) of the outer casing (62) and connected at another end to the outer peripheral surface (612) of the inner casing (61). A part of a bypass line (40) is formed inside the support portion (30).

With such configuration, the bypass line is disposed inside the support portion for supporting the inner casing. Therefore, as compared with a case where the bypass line is not disposed inside the support portion but the bypass line is disposed so as to extend in the heat medium flow line outside the support portion, it is possible to suppress occurrence of a new flow line loss.

6) The cryogenic generator turbine 1 according to yet another aspect is the cryogenic generator turbine (1) defined in any one of 1) to 5), where the cryogenic generator turbine (1) is installed such that an end portion on the one side of the rotor shaft (11) is higher than an end portion on the another side of the rotor shaft (11) in a vertical direction.

With such configuration, since the side of the first-stage axial-flow turbine is high and the side of the second-stage axial-flow turbine side is low in the vertical direction, the heat medium in the heat medium flow line passes through the second-stage axial-flow turbine and is discharged to the outside of the cryogenic generator turbine. Thus, it is possible to suppress generation of liquid pool in the heat medium flow line when an operation is stopped.

### Reference Signs List

- 1: Cryogenic generator turbine
- 2: Liquefied gas supply line
- 3: Condenser
- 31: Heating-side pipeline
- 32: Heated-side pipeline
- 4: Heating fluid supply line
- 5: Cryogenic pump
- 6: Casing
- 7: Evaporator
- 71: Heat medium heated-side pipeline
- 72: Heat medium heating-side pipeline
- 8: Generator
- 9: Heat medium circulation line
- 10A: Floating structure
- 10: Vessel
- 10B: Liquefied gas terminal
- 11: Rotor shaft
- 21: Liquefied gas storage device
- 22: Liquefied gas pump
- 23: First-stage axial-flow turbine
- 23A: First-stage stationary blade
- 23B: First-stage moving blade
- 24: Second-stage axial-flow turbine
- 24A: Second-stage stationary blade
- 23B: Second-stage moving blade
- 26: Seal member
- 26A: One-side seal portion
- 26B: Another-side seal portion
- 27A: One-side ball bearing
- 27B: Another-side ball bearing
- 30: Support portion
- 40: Bypass line
- 40A: Inlet-side opening portion
- 40B: Radially extending introduction portion
- 40B1: Penetrating portion
- 40C: Axially extending portion
- 40D: Present discharge portion
- 40E: Outlet-side opening portion
- 42: Heating fluid pump
- 61: Inner casing
- 61A: Inner casing member
- 61A1: Axially extending portion
- 61A2: Radially extending portion
- 61B: One-side cover member
- 61C: Another-side cover member
- 610: Space
- 611: Inner peripheral surface
- 612: Outer peripheral surface
- 612B: Outer peripheral surface
- 62: Outer casing
- 621: Inner peripheral surface
- 63: Heat medium flow line
- 64A: One-side introduction path
- 64B: Another-side discharge path
- 65A: Inlet casing
- 630A: Inner surface
- 65B: Outlet casing
- 630B: Inner surface
- 81: Generator rotor
- 82: Generator stator
- 100: Cryogenic power generation system
- 101: Thrust collar
- 102: Thrust bearing device
- 102A: One-side thrust bearing
- 102B: Another-side thrust bearing
- 103: Radial bearing device
- 103A: Another-side radial bearing
- 103B: Another-side radial bearing
- 111: Shaft portion
- 112A, 112B: Outer surface
- 113A: One-side disc portion
- 113B: Another-side disc portion
- 114A: One-side protruding portion
- 114B: Another-side protruding portion
- 115A: One-side nut
- 115B: Another-side nut
- CA: Axis

## Claims

1. A cryogenic generator turbine which is disposed in a heat medium circulation line (9) configured to circulate a heat medium for heating a liquefied gas, comprising:
a rotor shaft (11);
an inner casing (61) for rotatably housing the rotor shaft (11);
an outer casing (62) disposed on an outer peripheral side of the inner casing (61);
a generator (8) which includes a generator rotor (81) formed on an outer peripheral surface of the rotor shaft (11) and a generator stator (82) supported by an inner peripheral surface of the inner casing (61);
a first-stage turbine moving blade (23B) disposed on one side of the rotor shaft (11) relative to the generator rotor (81);
a first-stage turbine stationary blade (23A) supported by an inner peripheral surface (621) of the outer casing (62) or an outer peripheral surface (612) of the inner casing (61) on the one side of the rotor shaft, relative to the first-stage moving blade (23B); and
a heat medium flow line (63) defined between the outer peripheral surface (612) of the inner casing (61) and the inner peripheral surface (621) of the outer casing (62);
**characterized in that** a second-stage turbine stationary blade (24A) is supported by the inner peripheral surface (621) of the outer casing (62) or the outer peripheral surface (612) of the inner casing (61) on another side of the rotor shaft (11) relative to the generator rotor (81);
a second-stage turbine moving blade (23B) is disposed on the another side of the rotor shaft relative to the second-stage turbine stationary blade (24A); and
the heat medium flow line (63) extends from upstream of the first-stage turbine stationary blade (23A) to downstream of the second-stage turbine moving blade (23B) along an axial direction of the rotor shaft (11); and
the heat medium flowing through the heat medium flow line (63) passes through the second-stage turbine stationary blade (24A), and then acts on the second-stage turbine moving blade (23A) to apply a rotational force to a shaft portion (111) of the rotor shaft (11).

2. The cryogenic generator turbine according to claim 1,
further comprising a one-side seal portion (26A) for sealing between the rotor shaft (11) and the inner casing (61) on the another side relative to the first-stage moving blade (23B) and the one side relative to the generator rotor (81).

3. The cryogenic generator turbine according to claim 1,
further comprising an another-side seal portion (26B) for sealing between the rotor shaft (11) and the inner casing (61) on the one side relative to the second-stage moving blade (23B) and the another side relative to the generator rotor (81).

4. The cryogenic generator turbine according to claim 1,
further comprising a bypass line (40) causing an inside of the inner casing (61) to communicate with a position on a downstream side relative to the second-stage moving blade (23B) in the heat medium flow line (63).

5. The cryogenic generator turbine according to claim 4,
further comprising at least one support portion (30) extending in the heat medium flow line (63) along a radial direction of the rotor shaft (11), the at least one support portion (30) being connected at one end to the inner peripheral surface (621) of the outer casing (62) and connected at another end to the outer peripheral surface (612) of the inner casing (61),
wherein a part of the bypass line (40) is formed inside the support portion (30).

6. The cryogenic generator turbine according to claim 1,
wherein the cryogenic generator turbine is installed such that an end portion on the one side of the rotor shaft (11) is higher than an end portion on the another side of the rotor shaft (11) in a vertical direction.

7. A cryogenic power generation system, comprising
the cryogenic generator turbine (1) according to any one of claims 1 to 6.

## Patentansprüche

1. Kryogene Stromerzeugungsturbine, die in einer Wärmeträgermedium-Zirkulationsleitung (9) angeordnet ist, die dazu ausgelegt ist, ein Wärmeträgermedium zum Erwärmen eines verflüssigten Gases zirkulieren zu lassen, umfassend:
eine Rotorwelle (11);
ein Innengehäuse (61) zur drehbaren Aufnahme der Rotorwelle (11);
ein Außengehäuse (62), das auf einer außenperipheren Seite des Innengehäuses (61) angeordnet ist;
einen Generator (8), der einen Generatorrotor (81), der auf einer Außenperipheriefläche der Rotorwelle (11) gebildet ist, und einen Generatorstator (82), der von einer Innenperipheriefläche des Innengehäuses (61) getragen wird, einschließt;
eine Turbinenlaufschaufel der ersten Stufe (23B), die auf einer Seite der Rotorwelle (11) relativ zu dem Generatorrotor (81) angeordnet ist;
eine Turbinenleitschaufel der ersten Stufe (23A), die von einer Innenperipheriefläche (621) des Außengehäuses (62) oder einer Außenperipheriefläche (612) des Innengehäuses (61) auf der einen Seite der Rotorwelle relativ zu der Turbinenlaufschaufel der ersten Stufe (23B) getragen wird; und
einen Wärmeträgermedium-Strömungspfad (63), der zwischen der Außenperipheriefläche (612) des Innengehäuses (61) und der Innenperipheriefläche (621) des Außengehäuses (62) gebildet ist;
**dadurch gekennzeichnet, dass** eine Turbinenleitschaufel der zweiten Stufe (24A) von der Innenperipheriefläche (621) des Außengehäuses (62) oder der Außenperipheriefläche (612) des Innengehäuses (61) auf einer anderen Seite der Rotorwelle (11) relativ zu dem Generatorrotor (81) getragen wird;
eine Turbinenlaufschaufel der zweiten Stufe (23B) auf der anderen Seite der Rotorwelle relativ zu der Turbinenleitschaufel der zweiten Stufe (24A) angeordnet ist; und
der Wärmeträgermedium-Strömungspfad (63) sich entlang einer Axialrichtung der Rotorwelle (11) von stromaufwärts der Turbinenleitschaufel der ersten Stufe (23A) bis stromabwärts der Turbinenlaufschaufel der zweiten Stufe (23B) erstreckt; und
das Wärmeträgermedium, das durch den Wärmeträgermedium-Strömungspfad (63) strömt, durch die Turbinenleitschaufel der zweiten Stufe (24A) hindurchtritt und dann auf die Turbinenlaufschaufel der zweiten Stufe (23A) einwirkt, um auf einen Wellenabschnitt (111) der Rotorwelle (11) eine Drehkraft auszuüben.

2. Kryogene Stromerzeugungsturbine nach Anspruch 1,
weiter umfassend einen einseitigen Dichtungsabschnitt (26A) zum Abdichten zwischen der Rotorwelle (11) und dem Innengehäuse (61) auf der anderen Seite relativ zu der Turbinenlaufschaufel der ersten Stufe (23B) und der einen Seite relativ zu dem Generatorrotor (81).

3. Kryogene Stromerzeugungsturbine nach Anspruch 1,
weiter umfassend einen anderseitigen Dichtungsabschnitt (26B) zum Abdichten zwischen der Rotorwelle (11) und dem Innengehäuse (61) auf der einen Seite relativ zu der Turbinenlaufschaufel der zweiten Stufe (23B) und der anderen Seite relativ zu dem Generatorrotor (81).

4. Kryogene Stromerzeugungsturbine nach Anspruch 1,
weiter umfassend eine Bypassleitung (40), die bewirkt, dass ein Inneres des Innengehäuses (61) mit einer Position auf einer stromabwärtigen Seite relativ zu der Turbinenlaufschaufel der zweiten Stufe (23B) in dem Wärmeträgermedium-Strömungspfad (63) in Verbindung steht.

5. Kryogene Stromerzeugungsturbine nach Anspruch 4,
weiter umfassend wenigstens einen Stützabschnitt (30), der sich in dem Wärmeträgermedium-Strömungspfad (63) entlang einer radialen Richtung der Rotorwelle (11) erstreckt, wobei der mindestens eine Stützabschnitt (30) an einem Ende mit der Innenperipheriefläche (621) des Außengehäuses (62) verbunden ist und an einem anderen Ende mit der Außenperipheriefläche (612) des Innengehäuses (61) verbunden ist,
wobei ein Teil der Bypassleitung (40) innerhalb des Stützabschnitts (30) gebildet ist.

6. Kryogene Stromerzeugungsturbine nach Anspruch 1,
wobei die kryogene Stromerzeugungsturbine so installiert ist, dass ein Endabschnitt auf der einen Seite der Rotorwelle (11) in einer Vertikalrichtung höher ist als ein Endabschnitt auf der anderen Seite der Rotorwelle (11).

7. Kryogenes Stromerzeugungssystem, umfassend
die kryogene Stromerzeugungsturbine (1) nach einem der Ansprüche 1 bis 6.

## Revendications

1. Turbine de production d'énergie cryogénique disposée dans une conduite (9) de circulation du fluide caloporteur conçue pour faire circuler un fluide caloporteur destiné à chauffer un gaz liquéfié, comprenant :
un arbre de rotor (11) ;
une enveloppe intérieure (61), pour loger de façon rotative l'arbre de rotor (11) ;
une enveloppe extérieure (62), disposée sur un côté périphérique extérieur de l'enveloppe intérieure (61) ;
un générateur (8), qui inclut un rotor de générateur (81) formé sur une surface périphérique extérieure de l'arbre de rotor (11) et un stator de générateur (82) supporté par une surface périphérique intérieure de l'enveloppe intérieure (61) ;
une aube mobile de turbine (23B) de premier étage, disposée sur un côté de l'arbre de rotor (11) par rapport au rotor de générateur (81) ;
une aube fixe de turbine (23A) de premier étage, supportée par une surface périphérique intérieure (621) de l'enveloppe extérieure (62) ou une surface périphérique extérieure (612) de l'enveloppe intérieure (61) sur ledit premier côté de l'arbre de rotor, par rapport à l'aube mobile de turbine (23B) de premier étage ; et
un conduit (63) d'écoulement du fluide caloporteur, défini entre la surface périphérique extérieure (612) de l'enveloppe intérieure (61) et la surface périphérique intérieure (621) de l'enveloppe extérieure (62) ;
**caractérisée en ce qu'**une aube fixe de turbine (24A) de deuxième étage est supportée par la surface périphérique intérieure (621) de l'enveloppe extérieure (62) ou par la surface périphérique extérieure (612) de l'enveloppe intérieure (61) sur un autre côté de l'arbre de rotor (11) par rapport au rotor de générateur (81) ;
une aube mobile de turbine (23B) de deuxième étage est disposée sur ledit autre côté de l'arbre de rotor par rapport à l'aube fixe de turbine (24A) de deuxième étage ; et
le conduit (63) d'écoulement du fluide caloporteur s'étend depuis l'amont de l'aube fixe de turbine (23A) de premier étage jusqu'en aval de l'aube mobile de turbine (23B) de deuxième étage selon une direction axiale de l'arbre de rotor (11) ; et
le fluide caloporteur circulant à travers le conduit (63) d'écoulement du fluide caloporteur passe à travers l'aube fixe de turbine (24A) de deuxième étage, et agit ensuite sur l'aube mobile de turbine du deuxième étage (23A) pour appliquer une force de rotation à une partie d'arbre (111) de l'arbre de rotor (11).

2. Turbine de production d'énergie cryogénique selon la revendication 1,
comprenant en outre une partie d'étanchéité (26A) de premier côté, pour assurer l'étanchéité entre l'arbre de rotor (11) et l'enveloppe intérieure (61) sur ledit autre côté par rapport à l'aube mobile de turbine (23B) de premier étage et sur ledit premier côté par rapport au rotor de générateur (81).

3. Turbine de production d'énergie cryogénique selon la revendication 1,
comprenant en outre une partie d'étanchéité (26B) d'autre côté, pour assurer l'étanchéité entre l'arbre de rotor (11) et l'enveloppe intérieure (61) sur ledit premier côté par rapport à l'aube mobile de turbine (23B) de deuxième étage et sur ledit autre côté par rapport au rotor de générateur (81).

4. Turbine de production d'énergie cryogénique selon la revendication 1,
comprenant en outre une conduite de dérivation (40) faisant communiquer l'intérieur de l'enveloppe intérieure (61) avec une position sur un côté aval par rapport à l'aube mobile (23B) de deuxième étage dans le conduit (63) d'écoulement du fluide caloporteur.

5. Turbine de production d'énergie cryogénique selon la revendication 4,
comprenant en outre au moins une partie de support (30) s'étendant dans le conduit (63) d'écoulement du fluide caloporteur selon une direction radiale de l'arbre de rotor (11), ladite au moins une partie de support (30) étant, à une extrémité, reliée à la surface périphérique intérieure (621) de l'enveloppe extérieure (62) et étant, à une autre extrémité, reliée à la surface périphérique extérieure (612) de l'enveloppe intérieure (61),
dans laquelle une partie de la conduite de dérivation (40) est formée à l'intérieur de la partie de support (30).

6. Turbine de production d'énergie cryogénique selon la revendication 1,
dans laquelle la turbine de production d'énergie cryogénique est installée de telle sorte qu'une partie d'extrémité sur ledit premier côté de l'arbre de rotor (11) est plus élevée qu'une partie d'extrémité sur ledit autre côté de l'arbre de rotor (11) dans une direction verticale.

7. Système de production d'énergie cryogénique, comprenant
la turbine (1) de production d'énergie cryogénique selon l'une quelconque des revendications 1 à 6.
